# EUROPÄISCHE PATENTANMELDUNG

(11) **EP 4 424 133 A1**
(43) Veröffentlichungstag der Anmeldung: **04.09.2024**
(21) Anmeldenummer: 24152231.7
(22) Anmeldetag: 16.01.2024
(51) Int. Cl.: A01B 79/00, G06Q 10/06, G06Q 50/02, A01D 34/00

(54) **PROZESSOPTIMIERUNGSASSISTENT EINER FUTTERERNTEPROZESSKETTE**

(30) Priorität: 01.03.2023 DE 102023104986
(71) Anmelder: CLAAS Saulgau GmbH, 88340 Bad Saulgau (DE)
(72) Erfinder: Mümken, Philipp, 88400 Biberach an der Riß (DE); Fischer, Josef, 88400 Biberach (DE); Reinhardt, Martin, 88367 Hohentengen (DE); Schmid, Christian, 88696 Owingen (DE); Rupp, Magnus, 73494 Rosenberg (DE); Pflanze, Sascha, 88348 Bad Saulgau (DE); Mock, Andreas, 88284 Wolpertswende (DE); Ober, Martin, 78736 Trichtingen (DE); Oldenburg, Joachim, 33428 Harsewinkel (DE); Fugunt, Michael, 88410 Bad Wurzach (DE); Thiesmann, Waldemar, 49080 Osnabrück (DE); Becker, Michael, 88367 Hohentengen (DE); Monkenbusch, Robin, 33378 Rheda-Wiedenbrück (DE)
(74) Vertreter: Budach, Steffen

(57) **Zusammenfassung**

Die Erfindung betrifft einen Prozessoptimierungsassistent (32) zur Optimierung eines Futterernteprozesses (1), wobei der Prozessoptimierungsassistent (32) eingerichtet ist einen Nutzer (34) bei der Optimierung einer den Futterernteprozess (1) beschreibenden landwirtschaftlichen Arbeitsaufgabe (11) zu unterstützen, wobei die Optimierung des Futterernteprozesses (1) zumindest die Planung und/oder Durchführung einer die Umsetzung der landwirtschaftlichen Arbeitsaufgabe (11) bewirkenden Futterernteprozesskette (13) umfasst, wobei die Futterernteprozesskette (13) eine Vielzahl von Prozessschritten (2) und eine Vielzahl landwirtschaftlicher Arbeitsmaschinen (31) umfasst, welche in einer vorgegebenen Reihenfolge die landwirtschaftliche Arbeitsaufgabe (11) abarbeiten und dass der Prozessoptimierungsassistent (32) eingerichtet ist eine Beratungsdienstleistung (33) zu erbringen, wobei die Beratungsdienstleistung (33) auf die Bearbeitung der landwirtschaftlichen Arbeitsaufgabe (11) gerichtet ist und dass die Beratungsdienstleistung (33) von einem Nutzer (34) beauftragt wird.

## Beschreibung

Die Erfindung betrifft einen Prozessoptimierungsassistenten zur Optimierung eines Futterernteprozesses, wobei der Prozessoptimierungsassistent eingerichtet ist, einen Nutzer bei der Optimierung einer den Futterernteprozess beschreibenden landwirtschaftlichen Arbeitsaufgabe zu unterstützen nach dem Oberbegriff des Anspruchs 1.

Aus der EP 3 314 997 B1 ist ein Erntemanagementsystem bekannt geworden, welches mittels geeigneter Sensoren die Feuchte eines zu erntenden Futterbestandes überwacht und in Abhängigkeit von der detektierten Gutfeuchte nachgeordnete Ernteprozessschritte regelt. Im Einzelnen ist dort offenbart, dass in Abhängigkeit von der detektierten Gutfeuchte das sogenannte Zetten oder Wenden des auf dem Feld abgelegten Erntegutes gesteuert wird. Zudem ist beschrieben, dass das geerntete Gut erst ab einer bestimmten Feuchtigkeit mittels Ballenpressen geerntet und in Ballen verpresst wird. Ein derartiges System hat zumindest den Vorteil, dass einzelne Schritte eines Futterernteprozesses in Abhängigkeit von der detektierten Gutfeuchte gesteuert werden können. Nachteilig ist, dass ein vollständiger Futterernteprozess deutlich komplexer ist und eine Regelung von einzelnen Arbeitsschritten eines Futterernteprozesses in Abhängigkeit allein von der Feuchte des zu erntenden Gutes nicht sicherstellt, dass das Erntegut eine ausreichend hohe, für die Einlagerung geeignete Erntequalität hat.

Ein ähnlicher Ansatz ist auch aus der DE 20 2019 000 311 U1 bekannt geworden, wobei dort ein zu erwartender Trockenmassegehalt in Abhängigkeit von Prozessstufen und Bearbeitungsintensitäten abgeschätzt wird. Es wird auch beschrieben, dass verschiedenste Randbedingungen bei der Abschätzung des Trockenmassegehaltes berücksichtigt werden und Solleinstellungen von Aufbereitungsorganen ermittelt und zwischen verschiedensten Arbeitsmaschinen ausgetauscht werden. Auch der DE 20 2019 000 311 U1 haftet das Problem an, dass ausschließlich die Trockenmasse, das Pendant zur Gutfeuchte, überwacht und zur Steuerung eines Futterernteprozesses genutzt wird.

Den bekannten Systemen haftet zudem der Nachteil an, dass die Optimierung der Prozesskette auf während des Ernteprozesses generierten Daten beruht und das System eine Optimierung der Prozessparameter nur innerhalb der vorausgewählten Maschinensysteme vornehmen kann. Es wäre daher wünschenswert, dass die Optimierung einer Futterernteprozesskette flexibler gestaltet wird.

Es ist deshalb Aufgabe der Erfindung die beschriebenen Nachteile des Standes der Technik zu vermeiden und insbesondere einen Prozessoptimierungsassistenten vorzuschlagen, welcher die komplexen Zusammenhänge eines Futterernteprozesses besser berücksichtigt und sicherstellt, dass ein qualitativ hochwertiges, für die Einlagerung geeignetes und einen hohen Energiegehalt aufweisendes Erntegut erzeugt wird.

Diese Aufgabe wird erfindungsgemäß durch die kennzeichnenden Merkmale des Anspruchs 1 gelöst.

Indem der Prozessoptimierungsassistent zur Optimierung eines Futterernteprozesses eingerichtet ist einen Nutzer bei der Optimierung einer den Futterernteprozess beschreibenden landwirtschaftlichen Arbeitsaufgabe zu unterstützen, wobei die Optimierung des Futterernteprozesses zumindest die Planung und/oder Durchführung einer die Umsetzung der landwirtschaftlichen Arbeitsaufgabe bewirkenden Futterernteprozesskette umfasst, wobei die Futterernteprozesskette eine Vielzahl von Prozessschritten und eine Vielzahl landwirtschaftlicher Arbeitsmaschinen umfasst, welche in einer vorgegebenen Reihenfolge die landwirtschaftliche Arbeitsaufgabe abarbeiten und der Prozessoptimierungsassistent weiter eingerichtet ist, eine Beratungsdienstleistung zu erbringen, wobei die Beratungsdienstleitung auf die Bearbeitung der landwirtschaftlichen Arbeitsaufgabe gerichtet ist und dass die Beratungsdienstleistung von einem Nutzer beauftragt wird wird sichergestellt, dass die von dem Prozessoptimierungsassistenten generierte Beratungsdienstleistung die komplexen Zusammenhänge eines Futterernteprozesses besser berücksichtigt und sicherstellt, dass ein qualitativ hochwertiges, für die Einlagerung geeignetes und einen hohen Energiegehalt aufweisendes Erntegut erzeugt werden kann.

In einer vorteilhaften Ausgestaltung der Erfindung umfasst die Beratungsdienstleistung Beratungskriterien, wobei die Beratungskriterien zumindest die Ermittlung eines Startpunktes für den Prozessschritt Beginn des Futterernteprozesses und/oder eine Ermittlung der die Futterernteprozesskette bildenden Prozessschritte und die Bestimmung der Abfolge der Prozessschritte sind. Auf diese Weise wird es möglich, dass auch komplexe Futterernteprozessketten mittels der erbrachten Beratungsdienstleistung optimiert werden können.

In einer weiteren vorteilhaften Ausgestaltung der Erfindung umfasst die den Futterernteprozess beschreibenden Prozessschritte der Beratungskriterien einen oder mehrere der Prozessschritte Mähen des Erntegutes, Wenden des Erntegutes, Schwaden des Erntegutes, Schwadernte mittels Feldhäcksler, Schwadernte mittels Ballenpresse, Schwadernte mittels Ladewagen, Aufsammeln und Abtransport von Erntegutballen sowie die Einlagerung von Erntegut, sodass die Beratungsdienstleistung flexibel an Ernteprozessketten angepasst werden kann.

Indem in einer weiteren vorteilhaften Ausgestaltung der Erfindung die in der Beratungsdienstleistung definierten Prozessschritte die den jeweiligen Prozessschritten zugeordneten erforderlichen landwirtschaftlichen Arbeitsmaschinen umfassen, wobei den landwirtschaftlichen Arbeitsmaschinen Arbeitsorgane zugeordnet sind und die Arbeitsweise der jeweiligen landwirtschaftlichen Arbeitsmaschinen und der ihnen jeweils zugeordneten Arbeitsorgane durch Arbeitsparameter steuerbar sind und die Beratungsdienstleistung weiter die Ermittlung optimierter Arbeitsparameter umfasst wird sichergestellt, dass die zu erbringende Bratungsdienstleistung die Arbeitsweise verschiedenster landwirtschaftlicher Arbeitsmaschinen optimieren kann.

Eine vorteilhafte Weiterbildung der Erfindung ergibt sich dann, wenn der Prozessoptimierungsassistent zumindest eine Bedieneinrichtung umfasst, wobei die Bedieneinrichtung von zumindest einer Eingabe- und Anzeigeeinheit und einer Speicher- und Datenverarbeitungseinheit gebildet wird und die Bedieneinrichtung einer oder mehreren die Prozesskette bildenden landwirtschaftlichen Arbeitsmaschinen und/oder einer stationären Einheit zugeordnet ist und vorzugsweise eine oder mehrere der Bedieneinrichtungen eingerichtet sind untereinander Daten auszutauschen. Eine derartige Ausgestaltung hat den Effekt, dass eine Beratungsdienstleistung von verschiedensten Nutzern beauftragt werden kann und ein Ergebnis einer beauftragten Bratungsdienstleistung verschiedensten Nutzern zur Verfügung gestellt werden kann.

In einer weiteren vorteilhaften Ausgestaltung der Erfindung ist der Prozessoptimierungsassistent weiter eingerichtet Eingangsdaten aus internen und/oder externen Datenquellen zu beziehen und vorzugsweise sind zumindest die der jeweiligen Bedieneinrichtung zugeordnete Speicher- und Datenverarbeitungseinheit in Teilen oder vollständig einer Datencloud zugeordnet. Dies hat insbesondere den Effekt, dass große Datenmengen bei der Generierung der Beratungsdienstleitung berücksichtigt werden, sodass eine qualitativ hochwertige Bratungsdienstleistung zur Verfügung gestellt werden kann.

In einer vorteilhaften Weiterbildung der Erfindung durchläuft die Beratungsdienstleistung des Prozessoptimierungsassistenten einen dreiphasigen Beratungsdienstleistungsprozess, wobei
die erste Phase die Auftragsgenerierungsphase umfasst und in der Auftragsgenerierungsphase der Nutzer die Beauftragung der Beratungsdienstleistung vornimmt, wobei die Beauftragung zumindest die Definition der durchzuführenden landwirtschaftlichen Arbeitsaufgabe und die Vorgabe von Qualitätsparametern und diesen zugeordnete Qualitätskriterien und/oder die Vorgabe des Verwendungszwecks des Erntegutes umfasst;
die zweite Phase die Auftragsbearbeitungsphase umfasst und in der Auftragsbearbeitungsphase der Prozessoptimierungsassistent auf Eingangsdaten aus internen und/oder externen Datenquellen zugreift und unter Berücksichtigung der eingegebenen oder hinterlegten Qualitätsparameter und/oder den Qualitätsparametern zugeordneten Qualitätskriterien die Beratungsdienstleistung erstellt, wobei der Prozessoptimierungsassistent eingerichtet ist Grenzwerte für die Qualitätsparameter und/oder die den Qualitätsparametern zugeordneten Qualitätskriterien zu berücksichtigen, wobei die Grenzwerte in dem Prozessoptimierungsassistenten hinterlegt sind oder an diesen übergeben werden und wobei die Auftragsbearbeitungsphase einen Bearbeitungsschritt umfasst, in welchem die Ist-Situation der jeweiligen landwirtschaftlichen Arbeitsaufgabe ermittelt wird;
die dritte Phase die Ergebnisphase umfasst, wobei in der Ergebnisphase das Ergebnis der Beratungsdienstleistung an den oder die Nutzer kommuniziert wird, wobei die Beratungsdienstleistung die Beratungskriterien, insbesondere die Ermittlung eines Startpunktes für den Prozessschritt Beginn des Futterernteprozesses und/oder eine Ermittlung der die Futterernteprozesskette bildenden Prozessschritte und die Bestimmung der Abfolge der Prozessschritte umfasst, wobei die Beratungsdienstleistung und ihr zugeordneten Beratungskriterien in einem Ergebnisdatensatz zusammengefasst werden, welcher an einen oder mehreren Nutzen übermittelt wird.

Auf diese Weise wird es möglich, dass die Beratungsdienstleistung ganz spezifisch an den jeweils zu optimierenden Futterernteprozess angepasst werden kann.

Damit die Beratungsdienstleistung flexibel von einem Nutzer beauftragt werden kann ist in einer vorteilhaften Ausgestaltung vorgesehen, dass ein Nutzer den die Beratungsdienstleistung repräsentierenden Ergebnisdatensatz zu einem frühen Zeitpunkt in Auftrag geben und abrufen kann.

Um das Optimierungsergebnis der Beratungsdienstleistung auch während des laufenden Ernteprozesses qualitativ hochwertig zu halten, ist in einer vorteilhaften Ausgestaltung der Erfindung vorgesehen, dass der Ergebnisdatensatz während der Abarbeitung der die landwirtschaftliche Arbeitsaufgabe definierenden Futterernteprozesskette regelmäßig aktualisiert wird.

In einer vorteilhaften Weiterbildung der Erfindung ist der Prozessoptimierungsassistent weiter eingerichtet, dass die in der Beratungsdienstleistung definierten Prozessschritte die dem jeweiligen Prozessschritt zugeordneten erforderlichen landwirtschaftlichen Arbeitsmaschinen umfassen, wobei den landwirtschaftlichen Arbeitsmaschinen Arbeitsorgane zugeordnet sind und die Arbeitsweise der jeweiligen landwirtschaftlichen Arbeitsmaschine und der ihnen jeweils zugeordneten Arbeitsorgane durch Arbeitsparameter steuerbar sind und die Beratungsdienstleistung weiter die Ermittlung optimierter Arbeitsparameter umfasst. Dies hat insbesondere den Effekt, dass die Arbeitsweise jeder der in den Futterernteprozess integrierten landwirtschaftlichen Arbeitsmaschinen individuell optimiert werden kann.

Indem in einer vorteilhaften Ausgestaltung die Eingangsdaten von externen Datenquellen bezogen werden und Wetterdaten und/oder Bodenwertdaten und/oder Geographie- und Topographiedaten umfassen wird sichergestellt, dass externe Bedingungen bei der Generierung der Beratungsdienstleistung hinreichend berücksichtigt werden.

Die Beratungsdienstleistung wird auch dann um so hochwertiger sein je mehr Informationen zum Erntegut und zur Beschaffenheit des Bodens, auf welchem das Erntegut wächst berücksichtigt werden. In diesem Zusammenhang ist es daher von Vorteil, wenn in einer vorteilhaften Ausgestaltung der Erfindung die Eingangsdaten Aufwuchsmodelldaten, Schätzdaten der zu erwartenden Erträge, Schätzdaten zu den Inhaltsstoffen, Schätzdaten zur voraussichtlichen Trocknungszeit, Schätzdaten zur Befahrbarkeit sowie Daten zu statischen und dynamischen Hindernisse umfassen.

Umfassen die Eingangsdaten Ertragsvorhersagen, ist es in einer weiteren vorteilhaften Ausgestaltung der Erfindung von Vorteil, wenn die Ertragsdaten aus einer Kombination von Satellitendaten zur Bestandsvitalität und mittels Photogrammmetrie ermittelten Bestandsvolumen umfassen. Dies hat insbesondere den Vorteil, dass die Beratungsdienstleistung detailliert Bestandseigenschaften berücksichtigen kann.

Zudem kann vorgesehen sein, dass die Eingangsdaten Erfahrungswerte aus Prozessschritten vorhergehender Jahre umfassen. Dies hat den Vorteil, dass die Beratungsdienstleistung flexibel Erfahrungswissen berücksichtigen kann.

In einer vorteilhaften Ausgestaltung kann weiter vorgesehen sein, dass die Eingangsdaten von Sensorsystemen generierte Daten umfassen, insbesondere Sensorsysteme, die eine optimale Anwelkzeit ermitteln; die eine Aufzeichnung der Abarbeitung ermöglichen und Sensorsysteme, die eingerichtet sind, Trockenmassegehalte des Erntegutes zu ermittelt.

Zudem kann vorgesehen sein, dass der Prozessoptimierungsassistent Arbeitsparameter vorschlägt, die in Abhängigkeit von Eigenschaften des Feldbodens generiert werden und vorzugsweise die Anpassung einer Schnitthöhe und die Ablage des Erntegutes in Breitablage umfassen. Auf diese Weise kann in Bereichen mit Maulwurfhügeln die Arbeitsweise der jeweiligen landwirtschaftlichen Arbeitsmaschine so angepasst werden, dass das Erntegut wenig verschmutzt wird.

Weitere vorteilhafte Ausgestaltungen sind Gegenstand weiterer Unteransprüche und werden nachfolgend an Hand in mehreren Figuren dargestellter Ausführungsbeispiele beschrieben.

Es zeigen:
- Figur 1: eine Prinzipdarstellung des erfindungsgemäßen Prozessoptimierungsassistenten
- Figur 2:: eine schematische Darstellung der Generierung der Beratungsdienstleistung
- Figur 3:: einen Anwendungsfall der Generierung der Beratungsdienstleistung

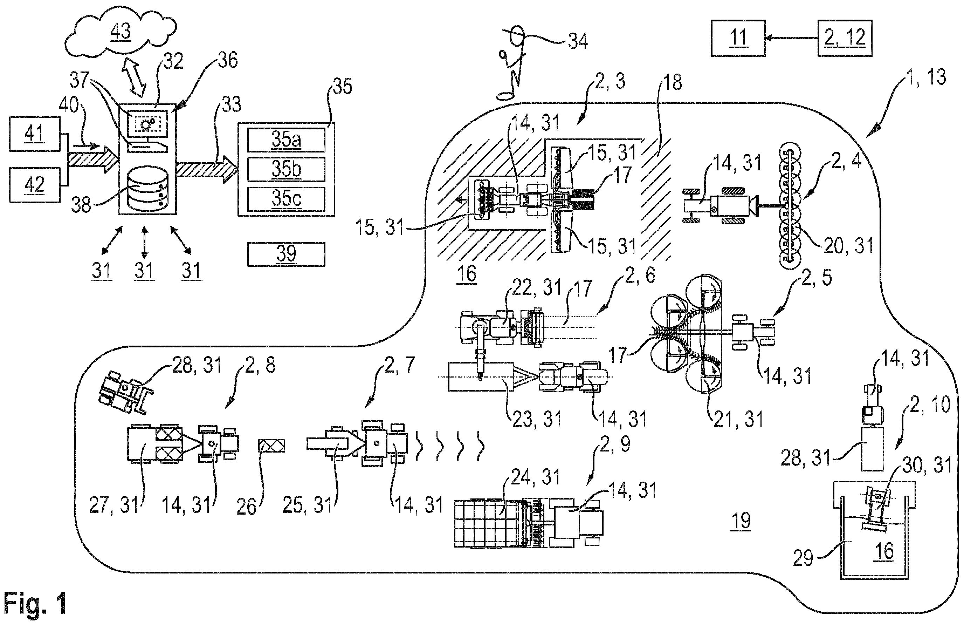

Fig. 1 zeigt schematisch einen Futterernteprozess 1, wobei der dargestellte Futterernteprozess 1 eine Vielzahl noch näher zu beschreibender Prozessschritte 2 umfasst. Im Einzelnen sind die Prozessschritte 2 Mähen 3, Wenden oder Zetten 4, Schwaden 5, Schwadernte mittels Feldhäcksler 6, Schwadernte mittels Ballenpresse 7, Aufsammeln und Abtransport der Erntegutballen 8, Schwadernte mittels Ladewagen 9 und Einlagerung 10 des Ernteguts 16 dargestellt. Aus Vereinfachungsgründen sind in Figur 1 auch alternative Prozessschritte 2 dargestellt, die sich in der Praxis wechselseitig ausschließen, etwa Schwadernte mittels Feldhäcksler 6 oder Schwadernte mittels Ballenpresse 7 oder Schwadernte mittels Ladewagen 9. Der zu optimierende Futterernteprozess 1 wird durch die im Folgenden noch zu erläuternde landwirtschaftliche Arbeitsaufgabe 11 beschrieben und umfasst eine anwendungsfall-abhängige Auswahl von Prozessschritten 2 und die Reihenfolge ihrer Abarbeitung. Als weiterer Prozessschritt 2 kommt zudem die Entscheidung über den Beginn 12 des Futterernteprozesses 1 in Betracht. Die die jeweilige landwirtschaftliche Arbeitsaufgabe 11 beschreibenden Prozessschritte 2 werden nachfolgend als Futterernteprozesskette 13 bezeichnet.

Im dargestellten Ausführungsbeispiel nach Figur 1 wird der Prozessschritt 2 Mähen 3 von einem Traktor 14 mit Front- und Seitenmähwerken 15 realisiert, wobei das Erntegut 16 in einem einzigen Erntegutschwad 17 abgelegt wird. Es liegt im Rahmen der Erfindung, dass das dreiteilige Mähwerk 15 auch nur als ein- oder zweiteiliges Mähwerk 15 ausgeführt ist und mehrere Erntegutschwaden 17 bilden kann. Zudem kann das Erntegut 16 im Prozessschritt 2 Mähen 3 auch in Breitablage 18 auf dem Feldboden 19 abgelegt werden.

Der Prozessschritt 2 Wenden oder Zetten 4 wird mittels einer von einem Traktor 14 gezogenen oder auf diesem aufgesattelten Heuwerbungsmaschine 20, auch als Wender oder Zetter bezeichnet, umgesetzt und ist dem Prozessschritt 2 Mähen 3 nachgeordnet, wobei in diesem Fall im Prozessschritt 2 Mähen 3 das Erntegut 16 in Breitablage 18 abgelegt wird. Der Prozessschritt 2 Wenden oder Zetten 4 wird in Abhängigkeit von der Feuchte des in Breitablage 18 abgelegten Erntegutes 16 ein oder mehrmals durchgeführt.

Wurde das Erntegut 16 in Breitablage 18 auf dem Feldboden 19 abgelegt umfasst die Futterernteprozesskette 13 den Prozessschritt 2 Schwaden 5. Im hier dargestellten Ausführungsbeispiel wird der Prozessschritt 2 Schwaden 5 von einem Traktor 14 - Schwader 21 - Gespann realisiert, wobei der Schwader 21 als Vierkreiselschwader ausgeführt ist und das Erntegut 16 in einem einzigen Erntegutschwad 17 ablegt. Denkbar ist hier aber auch der Einsatz von Ein- oder Mehrkreiselschwadern, welche das Erntegut 16 in einem oder mehreren Erntegutschwaden 17 auf dem Feldboden 19 ablegen.

In einer ersten Ausgestaltung wird der Erntegutschwad 17 von einem Feldhäcksler 22 aufgenommen, in an sich bekannter Weise zerkleinert und an einen von einem Traktor 14 gezogenen Transportwagen 23 übergeben. Alternativ kann der Erntegutschwad 17 von einem von einem Traktor 14 gezogenen Ladewagen 24 aufgenommen werden. Ladewagen 24 sind in der Regel mit einer als Pickup ausgeführten Aufsammeleinrichtung ausgestattet, können je nach Ausstattung eine Zerkleinerung des aufgenommenen Ernteguts 16 vornehmen und dieses sodann in gewissem Umfang vorverdichtet an den eigentlichen Transportbehälter übergeben. Eine weiter Alternative kann die Aufnahme des Erntegutschwades 17 durch eine von einem Traktor 14 gezogene Ballenpresse 25, hier vorzugsweise als sogenannte Quaderballenpresse ausgeführte Ballenpresse 25, sein, wobei das Erntegut 16 sodann als Erntegutballen 26 auf dem Feldboden 19 abgelegt wird. An diesen Prozessschritt 2 schließt sich in der Regel der Prozessschritt 2 Aufsammeln und Abtransport der Erntegutballen 8 an, wobei hier in der Regel von Traktoren 14 gezogene Pritschenwagen 27 und Hubstapler 28, etwa Traktoren 14 mit Frontlader oder sogenannte Teleskoplader, zum Aufnehmen und überladen der Erntegutballen 26 zum Einsatz kommen.

Der Prozessschritt 2 Einlagerung des Erntegutes 10 kann einerseits die Einlagerung der Erntegutballen 26 umfassen. Andererseits kann das etwa von einem Transportwagen 23 oder einem Ladewagen 24 aufgenommene Erntegut 16 in einem Silo 29 eingelagert werden, wobei im dargestellten Ausführungsbeispiel ein Flachsilo gezeigt ist. Die Einlagerung 10 des Erntegutes 16 in einem Flachsilo erfolgt in der Regel in der Weise, dass der Traktor 14 gezogene Lade- oder Transportwagen 23, 24 das Erntegut 16 in das Silo 29 abgibt und dort ein Verdichtungsfahrzeug 30 das Erntegut 16 in an sich bekannter Weise durch mehrmaliges Überrollen und Zusammenschieben verdichtet.

Der jeweilige Traktor 14, das Mähwerk 15, die Heuwerbungsmaschine 20, der Schwader 21, der Feldhäcksler 22, der Transportwagen 23, der Ladewagen 24, die Ballenpresse 25, der Pritschenwagen 27, der Hubstapler 28 und das Verdichtungsfahrzeug 30 bilden die landwirtschaftlichen Arbeitsmaschinen 31 des zu optimierenden Futterernteprozesses 1 und die ihn beschreibende Futterernteprozesskette 13. Es liegt im Rahmen der Erfindung, dass jeder der landwirtschaftlichen Arbeitsmaschinen 31 selbstfahrend ausgeführt sein kann, wobei es auch im Rahmen der Erfindung liegt, dass die landwirtschaftlichen Arbeitsmaschinen 31 autonom, d.h. ohne Fahrer, den jeweiligen Prozessschritt 2 realisieren können.

Der Futterernteprozess 1 setzt sich folglich aus dem Zusammenspiel des zu erntenden Erntegutes 16 mit den die Futterernteprozesskette 13 bildenden Prozessschritten 2 und den jeweils diesen zugeordneten erforderlichen landwirtschaftlichen Arbeitsmaschinen 31 zusammen. Die landwirtschaftlichen Arbeitsmaschinen 31 umfassen hier noch nicht näher beschriebene Arbeitsorgane.

In erfindungsgemäßer und noch näher zu beschreibender Weise erfolgt die Optimierung des Futterernteprozesses 1 mittels eines Prozessoptimierungsassistenten 32, wobei der Prozessoptimierungsassistent 32 eingerichtet ist, einen Nutzer 34 bei der Optimierung der den Futterernteprozess 1 beschreibenden landwirtschaftlichen Arbeitsaufgabe 11 zu unterstützen, wobei die Optimierung des Futterernteprozesses 1 zumindest die Planung und/oder Durchführung der die Umsetzung der landwirtschaftlichen Arbeitsaufgabe 11 bewirkenden Futterernteprozesskette 13 umfasst, wobei die Futterernteprozesskette 13, wie beschrieben, eine Vielzahl von Prozessschritten 2 und eine Vielzahl landwirtschaftlicher Arbeitsmaschinen 31 umfasst, welche in einer vorgegebenen Reihenfolge die landwirtschaftliche Arbeitsaufgabe 11 abarbeiten. Erfindungsgemäß ist der Prozessoptimierungsassistent 32 eingerichtet eine Beratungsdienstleistung 33 zu erbringen, wobei die Beratungsdienstleitung 33 auf die Bearbeitung der landwirtschaftlichen Arbeitsaufgabe 11 gerichtet ist und dass die Beratungsdienstleistung 33 von einem Nutzer 34 beauftragt wird. Die Beratungsdienstleistung 33 umfasst Beratungskriterien 35 wobei die Beratungskriterien 35 zumindest die Ermittlung eines Startpunktes für den Prozessschritt 2 Beginn 12 des Futterernteprozesses 1, Beratungskriterium 35a, und/oder eine Ermittlung der die Futterernteprozesskette 13 bildenden Prozessschritte 2, Beratungskriterium 35b, und die Bestimmung der Abfolge der Prozessschritte 2, Beratungskriterium 35c, umfassen. In einer bevorzugten Ausgestaltung der Erfindung umfassen die den Futterernteprozess 1 beschreibenden Prozessschritte 2 der Beratungskriterien 35 ein oder mehrere der bereits beschriebenen Prozessschritte 2 Mähen 3 des Erntegutes 16, Wenden 4 des Erntegutes 16, Schwaden 5 des Erntegutes 16, Schwadernte mittels Feldhäcksler 6, Schwadernte mittels Ballenpresse 7, Schwadernte mittels Ladewagen 9, Aufsammeln und Abtransport von Erntegutballen 8 sowie die Einlagerung 10 von Erntegut 16.

Damit der Prozessoptimierungsassistent 32 von einem Nutzer 34 aktiviert oder beauftragt werden kann umfasst der Prozessoptimierungsassistent 32 zumindest eine Bedieneinrichtung 36, wobei die Bedieneinrichtung 36 von zumindest einer Eingabe- und Anzeigeeinheit 37 und einer Speicher- und Datenverarbeitungseinheit 38 gebildet wird. Die Bedieneinrichtung 36 kann einer oder mehreren der den Futterernteprozess 1 beschreibenden landwirtschaftlichen Arbeitsmaschinen 31 und/oder einer stationären Einheit 39 zugeordnet sein. Auf diese Weise kann der Prozessoptimierungsassistent 32 von beliebigen Nutzern 34 aktiviert werden, unabhängig davon, wo sich ein Nutzer 34 geographisch befindet oder zu welchem Zeitpunkt der Nutzer 34 die Beratungsdienstleitung 33 in Anspruch nehmen möchte. Indem die eine oder mehreren Bedieneinrichtungen 36 eingerichtet sind untereinander Daten auszutauschen wird zudem sichergestellt, dass das Ergebnis der Beratungsdienstleistung 33, die Beratungskriterien 35, all denjenigen Nutzern 34 übermittelt werden können, die in die Bearbeitung der jeweiligen landwirtschaftlichen Arbeitsaufgabe 11 involviert sind.

Zudem ist der Prozessoptimierungsassistent 32 eingerichtet Eingangsdaten 40 aus internen und/oder externen Datenquellen 41 ,42 zu beziehen und das vorzugsweise zumindest die der jeweiligen Bedieneinrichtung 36 zugeordnete Speicher- und Datenverarbeitungseinheit 38 in Teilen oder vollständig einer Datencloud 43 zugeordnet ist.

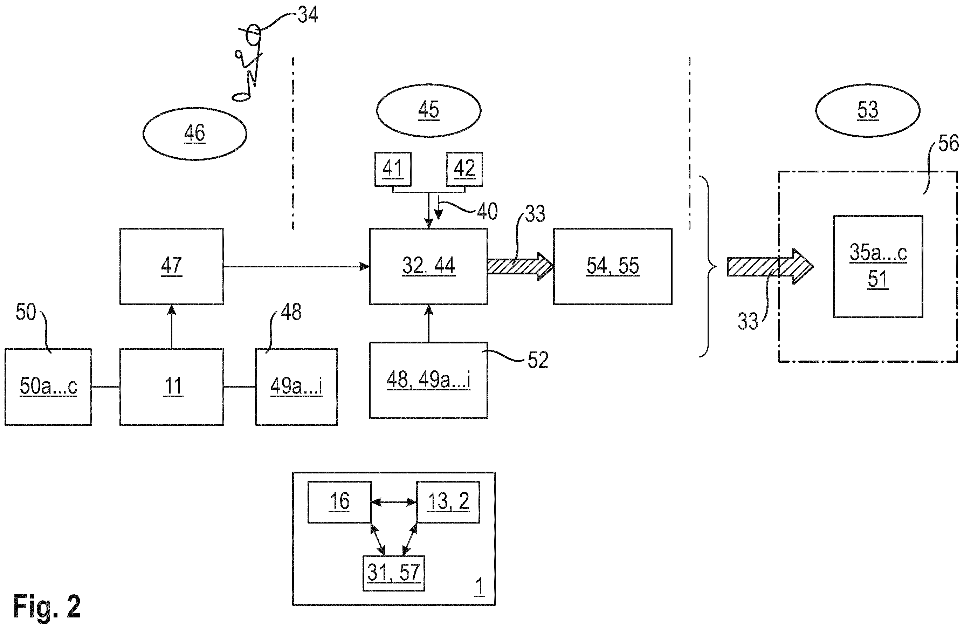

Figur 2 beschreibt nun in schematischer Weise den erfindungsgemäßen Prozessoptimierungsassistenten 32 näher. Der Prozessoptimierungsassistent 32 gliedert sich in einen dreiphasigen Beratungsdienstleistungsprozess, wobei dem Prozessoptimierungsassistenten 32 die Funktion des Beraters 44 in der Auftragsbearbeitungsphase 45 zukommt, welcher die erfindungsgemäße Beratungsdienstleistung 33 erbringt. Der Auftragsbearbeitungsphase 45 ist die Auftragsgenerierungsphase 46 vorgeordnet. In die Auftragsgenerierungsphase 46 fällt die Beauftragung 47 der Beratungsdienstleitung 33 durch einen Nutzer 34. In der Regel umfasst die Beauftragung 47 die Definition der durchzuführenden und zu optimierenden landwirtschaftlichen Arbeitsaufgabe 11. Vor dem Hintergrund, dass der Nutzer 34 ein qualitativ hochwertiges, für die Einlagerung geeignetes und einen hohen Energiegehalt aufweisendes Erntegut 16 erzeugen möchte wird die landwirtschaftliche Arbeitsaufgabe 11 durch den Nutzer 34 anhand von Qualitätsparametern 48 definiert, wobei die anwendungsfallabhängigen Qualitätsparameter 48 von vom Nutzer 34 zu definierenden Qualitätskriterien 49 bestimmt werden. Vorzugsweise umfassen die zu definierenden Qualitätskriterien 49 ein oder mehrere der Qualitätskriterien 49
- Kraftstoffbedarf 49a, vorzugsweise ein minimaler Kraftstoffbedarf,
- Durchsatz 49b, vorzugsweise ein maximaler Durchsatz,
- Gesamtkosten 49c, vorzugsweise minimale Gesamtkosten,
- Erntegutqualität 49d, vorzugsweise eine maximale Erntegutqualität,
- Erntegutverlust 49e, vorzugsweise ein minimaler Erntegutverlust,
- Energiegehalt 49f des Erntegutes 16, vorzugsweise ein maximaler Energiegehalt,
- Verschmutzungsgrad 49g, vorzugsweise ein minimaler Verschmutzungsgrad,
- Feuchte 49h des Erntegutes 16, vorzugsweise eine an den Verwendungszweck 45 angepasste optimierte Feuchte
- Erntegutertrag (49i), vorzugsweise ein maximaler Erntegutertrag.

Vor dem Hintergrund, dass die Qualitätsparameter 48 und die ihnen zugeordneten Qualitätskriterien 49 maßgeblich vom Verwendungszweck des Erntegutes 16 bestimmt werden, kann zusätzlich oder alternative die Beschreibung der landwirtschaftlichen Arbeitsaufgabe 11 durch den Nutzer 34 auf die Angabe des Verwendungszwecks 50 des Erntegutes 16 beschränkt sein. Typische Verwendungszwecke 50 des Erntegutes 16 können die Verwendung des Erntegutes 16
- zur Biogasgewinnung 50a aus erntefrischem oder siliertem Erntegut 16
- zur Tierfütterung 50b aus erntefrischem oder siliertem Erntegut 16, wobei die Tierfütterung 50b insbesondere die Rindermast und die Milchgewinnung umfasst und/oder
- zur Einlagerung 10 des Ernteguts 16 als Heu sein.

In der Bearbeitungsphase 45 greift der Prozessoptimierungsassistent 32, wie bereits beschrieben, auf Eingangsdaten 40 aus internen und/oder externen Datenquellen 41 ,42 zu, um die Beratungsdienstleistung 33 zu erbringen.

Wie bereits beschrieben setzt sich der Futterernteprozess 1 aus dem Zusammenspiel des zu erntenden Erntegutes 16 mit den die Futterernteprozesskette 13 bildenden Prozessschritten 2 und den jeweils diesen zugeordneten erforderlichen landwirtschaftlichen Arbeitsmaschinen 31 zusammen. Die landwirtschaftlichen Arbeitsmaschinen 31 umfassen hier nicht näher beschriebene Arbeitsorgane. Die Arbeitsweise der landwirtschaftlichen Arbeitsmaschinen 31 und der ihnen jeweils zugeordneten Arbeitsorgane können durch Änderung ihnen jeweils zugeordneter Arbeitsparameter 51 gesteuert werden.

Der Prozessoptimierungsassistent 32 ist zudem so beschaffen, dass Grenzwerte 52 für die Qualitätsparameter 48 und/oder die den Qualitätsparametern 48 zugeordneten Qualitätskriterien 49 definiert werden und die Grenzwerte 52 in dem Prozessoptimierungsassistenten 32 hinterlegt sind oder an diesen übergeben werden.

Die Auftragsbearbeitungsphase 45 umfasst zudem einen Bearbeitungsschritt 54 in welchem die noch näher zu beschreibende Ist-Situation 55 ermittelt wird. Dies ist erforderlich, damit der Prozessoptimierungsassistent 32 ausgehend von der vom Nutzer 34 definierten landwirtschaftlichen Aufgabenstellung 11 auf den konkreten Anwendungsfall bezogen die geeignete Beratungsdienstleistung 33 erbringen kann.

An die Auftragsbearbeitungsphase 45 schließt sich sodann eine Ergebnisphase 53 an, in der das Ergebnis der Beratungsdienstleistung 33 an den oder die Nutzer 34 kommuniziert wird. Gemäß den vorherigen Ausführungen umfasst die Beratungsdienstleistung 33 die Beratungskriterien 35, insbesondere die Ermittlung eines Startpunktes für den Prozessschritt 2 Beginn 12 des Futterernteprozesses 1, Beratungskriterium 35a, und/oder eine Ermittlung der die Futterernteprozesskette 13 bildenden Prozessschritte 2, Beratungskriterium 35b, und die Bestimmung der Abfolge der Prozessschritte 2, Beratungskriterium 35c. Die Beratungsdienstleistung 33 und ihr zugeordneten Beratungskriterien 35 bilden einen Ergebnisdatensatz 56, welcher an einen oder mehreren Nutzen 34 übermittelt wird. Zudem ist der Prozessoptimierungsassistent 32 so beschaffen, dass ein Nutzer 34 den die Beratungsdienstleistung 33 repräsentierenden Ergebnisdatensatz 56 zu einem frühen Zeitpunkt in Auftrag geben und abrufen kann. Zudem kann der Prozessoptimierungsassistent 32 so beschaffen sein, dass der Ergebnisdatensatz 56 während der Abarbeitung der die landwirtschaftlichen Arbeitsaufgabe 11 definierenden Futterernteprozesskette (13) regelmäßig aktualisiert werden kann. Dies hat insbesondere den Effekt, dass sich ändernde Randbedingungen unmittelbar in den Optimierungsprozess einfließen.

Weiter ist der Prozessoptimierungsassistent 32 so beschaffen, dass die in der Beratungsdienstleistung 33 definierten Prozessschritte 2 die dem jeweiligen Prozessschritt 2 zugeordneten erforderlichen landwirtschaftlichen Arbeitsmaschinen 31 umfassen, wobei den landwirtschaftlichen Arbeitsmaschinen 31 Arbeitsorgane 57 zugeordnet sind und die Arbeitsweise der jeweiligen landwirtschaftlichen Arbeitsmaschine 31 und der ihnen jeweils zugeordneten Arbeitsorgane 57 durch Arbeitsparameter 51 steuerbar sind und die Beratungsdienstleistung 33 weiter die Ermittlung optimierter Arbeitsparameter 51 umfasst.

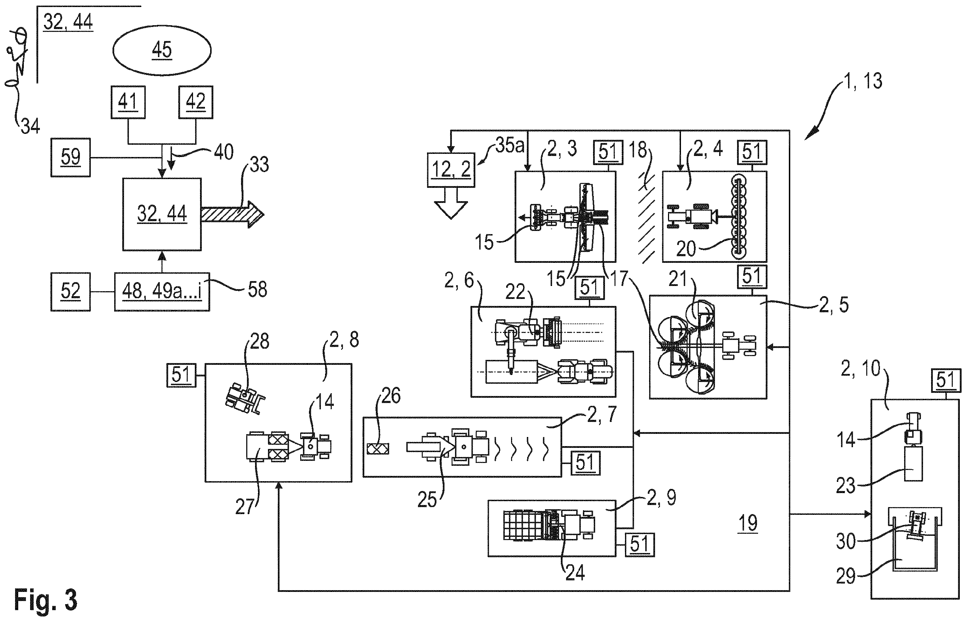

Figur 3 erläutert nun die Arbeitsweise des als Berater 44 fungierenden Prozessoptimierungsassistenten 32 am Beispiel eines typischen Futterernteprozesses 1. Wie bereits beschrieben greift der Prozessoptimierungsassistent 32 in der Bearbeitungsphase 45 auf Eingangsdaten 40 aus internen und/oder externen Datenquellen 41 ,42 zu, um die Beratungsdienstleistung 33 zu erbringen. Zudem werden, wie bereits beschrieben, von dem Berater 44 Qualitätsparameter 48 und diesen zugeordnete Qualitätskriterien 49 berücksichtigt. Aus Vereinfachungsgründen werden die Qualitätsparameter 48 und die Qualitätskriterien 49 nachfolgend gemeinschaftlich als Entscheidungskriterien 58 bezeichnet. Weiter liegt es im Rahmen der Erfindung, dass die Eingangsdaten 40 zudem von an sich bekannten und hier nicht näher beschriebenen Sensorsystemen 59 ermittelt werden können. Zudem können in dem Prozessoptimierungsassistenten 32 Grenzwerte 52 für die Entscheidungskriterien 58 hinterlegt sein.

Ein erstes Beratungskriterium 35a der Beratungsdienstleistung 33 umfasst den optimalen Zeitpunkt für den Beginn 12 des Futterernteprozesses 1, wobei der Beginn 12 auch den ersten, die jeweilige Futterernteprozesskette 13 definierende Prozessschritt 2 bildet. Der als Berater 44 fungierende Prozessoptimierungsassistent 32 analysiert die bezogenen Eingangsdaten 40 gemäß den Einsatzfall-abhängig definierten Entscheidungskriterien 58 und schlägt als Ergebnis den Zeitpunkt des Erntestarts 12 vor. Bezüglich des zu ermittelnden Futterernteprozessstarts 12 können die Entscheidungskriterien 58 Wetterdaten, eine geeignete Uhrzeit für den Erntebeginn, das Wachstumsstadium des Erntegutes 16, die Zusammensetzung des Erntegutes 16, die Höhenlage in der das Erntegut 16 geerntet werden soll, gegebenenfalls die Bodenfeuchte und ganz wesentlich die Feuchte des Erntegutes 16 selbst sein. Die Entscheidungskriterien 51 werden aus Eingangsdaten 40 ermittelt, die der Prozessoptimierungsassistent 32 aus internen oder externen Datenquellen 41, 42 bezieht.

Der eigentliche Prozess des Erntens beginnt mit dem Prozessschritt 2 Mähen 3. Je nach Anzahl und Ausstattungsgrad der zum Einsatz kommenden Mähwerke 15 können die Arbeitsparameter 51 ein oder mehrere der Arbeitsparameter 51 Schnitthöhe, die Entscheidung, ob ein Aufbereiter zum Einsatz kommen soll oder nicht, die Drehzahl der rotierend angetriebenen Mähmesser und die Drehzahl des Aufbereiters, der Klingenzustand der Mähmesser, der Auflagedruck der Mähwerke 15 auf den Feldboden 19 umfassen. Jeder dieser Arbeitsparameter 51 beeinflusst die zuvor beschriebenen Qualitätsparameter 48 des Erntegutes 16. So kann beispielsweise eine zu niedrige Schnitthöhe dazu führen, dass das Qualitätskriterium Verschmutzungsgrad 49g über einem zulässigen Grenzwert 52 liegt. Die Arbeitsparameter 51 werden aus den Eingangsdaten 40 ermittelt.

Es liegt im Rahmen der Erfindung, dass die Eingangsdaten 40 zudem von an sich bekannten und hier nicht näher beschriebenen Sensorsystemen 59, welche dem jeweiligen Mähwerk 15 zugeordnet sein können, ermittelt werden. Der Prozessoptimierungsassistent 32 analysiert die verschiedensten Eingangsdaten 40 gemäß den Einsatzfall-abhängig definierten Entscheidungskriterien 58 und schlägt als Ergebnis optimierte Arbeitsparameter 51 für den Prozessschritt 2 Mähen 3 vor.

Wie bereits beschrieben können die Mähwerke 15 das Erntegut 16 in einem oder mehreren Erntegutschwaden 17 oder in Breitablage 18 auf dem Feldboden 19 ablegen. Bei Breitablage 18 kann sich als nächster Prozessschritt 2 das Wenden 4 anschließen. Dabei wird das Erntegut 16 aufgewirbelt und wieder in Breitablage 18 abgelegt, sodass das Erntegut 16 mehr oder weniger gleichmäßig Wind und Sonne ausgesetzt wird, um die Trocknung des Erntegutes 16 zu beschleunigen. Die Arbeitsparameter 51 der zum Einsatz kommenden Heuwerbungsmaschinen 20 können ein oder mehrere der Arbeitsparameter 51 Trockenzeit, Rechhöhe, Streuwinkel, Fahrroute und Fahrgeschwindigkeit sein. Zudem können Umwelteinflüsse, wie etwa die Bodenfeuchte, die Windgeschwindigkeit und die Luftfeuchte berücksichtigt werden. So kann beispielsweise eine zu niedrige Rechhöhe dazu führen, dass das Qualitätskriterium Verschmutzungsgrad 49g über einem zulässigen Grenzwert 52 liegt. Die Arbeitsparameter 51 werden aus den Eingangsdaten 40 ermittelt. Es liegt im Rahmen der Erfindung, dass die Eingangsdaten 40 zudem von an sich bekannten und hier nicht näher beschriebenen Sensorsystemen 59, welche der jeweiligen Heuwerbungsmaschine 20 zugeordnet sein können, ermittelt werden. Der Prozessoptimierungsassistent 32 analysiert die verschiedensten Eingangsdaten 40 gemäß den Einsatzfall-abhängig definierten Entscheidungskriterien 58 und schlägt als Ergebnis optimierte Arbeitsparameter 51 für den Prozessschritt 2 Wenden 4 vor. Aufgrund dessen, dass das Wenden 4 dem alleinigen Zweck einer Trocknungsbeschleunigung des Erntegutes 16 dient, kann ein Arbeitsparameter 51 hier auch die Anzahl der Wiederholungen des Prozessschritts 2 Wenden 4 oder das völlige Weglassen dieses Prozessschritts 2 umfassen.

Wird das Erntegut 16 in Breitablage 18 auf dem Feldboden 19 abgelegt muss sich als weitere Prozesschritt 2 das Schwaden 5 anschließen. Wie bereits beschrieben hängt es von der Art des Schaders 21 ab, ob ein oder mehrere Erntegutschwaden 17 auf dem Feldboden 19 abgelegt werden. Die ein oder mehreren Arbeitsparameter 51 des jeweils eingesetzten Schwaders 21 können die Trockenzeit, die Rechhöhe, die Neigung des jeweiligen Schwadkreisels, die Fahrroute und die Fahrgeschwindigkeit sein. Zudem können Umwelteinflüsse, wie etwa die Bodenfeuchte, die Windgeschwindigkeit und die Luftfeuchte berücksichtigt werden. So kann beispielsweise auch beim Schwaden 5 eine zu niedrige Rechhöhe dazu führen, dass das Qualitätskriterium Verschmutzungsgrad 49g über einem zulässigen Grenzwert 53 liegt. Die Arbeitsparameter 51 werden aus den Eingangsdaten 40 ermittelt. Es liegt im Rahmen der Erfindung, dass die Eingangsdaten 40 zudem von an sich bekannten und hier nicht näher beschriebenen Sensorsystemen 59, welche dem jeweiligen Schwader 21 zugeordnet sein können, ermittelt werden. Der Prozessoptimierungsassistent 32 analysiert die verschiedensten Eingangsdaten 40 gemäß den Einsatzfall-abhängig definierten Entscheidungskriterien 58 und schlägt als Ergebnis optimierte Arbeitsparameter 51 für den Prozessschritt 2 Schaden 5 vor.

Unabhängig davon, auf welche Weise das Erntegut 16 zu einem Erntegutschwad 17 geformt wurde erfolgt schließlich dessen Ernte, wobei hier die Prozessschritte 2 Schwadernte mittels Feldhäcksler 6, Schwadernte mittels Ballenpresse 7 und Schwadernte mittels Ladewagen 9 unterschieden werden.

Allen drei Ernteprozesschritten 2 ist gemeinsam, dass die Arbeitsparameter 51 aus Eingangsdaten 40 ermittelt werden die der Berater 44 aus internen oder externen Datenquellen 42, 43 bezieht. Es liegt auch hier im Rahmen der Erfindung, dass die Eingangsdaten 40 zudem von an sich bekannten und hier nicht näher beschriebenen Sensorsystemen 59, welche dem jeweiligen Feldhäcksler 22 und zugehörigem Traktor - Transportwagen - Gespann 14, 23, der jeweiligen Ballenpresse 25 oder dem jeweiligen Ladewagen 24 zugeordnet sein können, ermittelt werden. Der Prozessoptimierungsassistent 32 analysiert die verschiedensten Eingangsdaten 40 gemäß den Einsatzfall-abhängig definierten Entscheidungskriterien 58 und schlägt als Ergebnis optimierte Arbeitsparameter 51 für den für die Prozessschritte 2 Schwadernte mittels Feldhäcksler 6, Schwadernte mittels Ballenpresse 7 und Schwadernte mittels Ladewagen 9 vor. Die ein oder mehreren Arbeitsparameter 51 können bei Schwadernte mittels Feldhäcksler 6 beispielsweise die Fahrtroute, die Häcksellänge, der Zerkleinerungsgrad des Erntegutes 16 und die Menge an einzubringendem Siliermittel sein. Bei Schwadernte mittels Ballenpresse 7 können die ein oder mehreren Arbeitsparameter 51 beispielsweise die Ballengröße, die Ballendichte, die Menge an einzubringendem Siliermittel und der Ablageort der Erntegutballen 26 sein. Bei Schwadernte mittels Ladewagen 9 können die ein oder mehreren Arbeitsparameter 51 in Analogie zum Feldhäcksler 22 die Fahrtroute, die Häcksellänge, der Zerkleinerungsgrad des Erntegutes 16 und die Menge an einzubringendem Siliermittel sein.

An den Prozessschritt 2 Schwadernte mittels Ballenpresse 7 schließt sich der Prozessschritt 2 Aufsammeln und Abtransport der Erntegutballen 8 an. Hier beschränken sich die Arbeitsparameter 51 im Wesentlichen auf ein optimiertes Überfahren des Feldbodens 19, um mit möglichst wenig Überrollungen die Erntegutballen 26 aufzusammeln. Aber auch in diesem Prozessschritt 2 ist es so, dass die Arbeitsparameter 51 aus den Eingangsdaten 40 ermittelt werden. Es liegt auch hier im Rahmen der Erfindung, dass die Eingangsdaten 40 zudem von an sich bekannten und hier nicht näher beschriebenen Sensorsystemen 59, welche den dem jeweiligen Hubstabler 28 und zugehörigem Traktor - Pritschenwagen - Gespann 14, 27 zugeordnet sein können, ermittelt werden. Der Prozessoptimierungsassistent 32 analysiert die verschiedensten Eingangsdaten 40 gemäß den Einsatzfall-abhängig definierten Entscheidungskriterien 58 und schlägt als Ergebnis optimierte Arbeitsparameter 51 für den Prozessschritt 2 Aufsammeln und Abtransport der Erntegutballen 8 vor.

Ein weiterer Prozessschritt 2 der erfindungsgemäßen Futterernteprozesskette 13 kann die Einlagerung 10 des Erntegutes 16 in einem Silo 29 sein. Hier beschränken sich die Arbeitsparameter 51 im Wesentlichen auf ein optimiertes Verdichten des Erntegutes 16 in dem Silo 29. Aber auch in diesem Prozessschritt 2 ist es so, dass die Arbeitsparameter 51 aus den Eingangsdaten 40 ermittelt werden. Es liegt auch hier im Rahmen der Erfindung, dass die Eingangsdaten 40 zudem von an sich bekannten und hier nicht näher beschriebenen Sensorsystemen 59, welche dem jeweiligen Verdichtungsfahrzeug 30 und zugehörigem Traktor - Transportwagen - Gespann 14, 23 zugeordnet sein können, ermittelt werden. Der Prozessoptimierungsassistent 32 analysiert die verschiedensten Eingangsdaten 40 gemäß den Einsatzfall-abhängig definierten Entscheidungskriterien 58 und schlägt als Ergebnis optimierte Arbeitsparameter 51 für den Prozessschritt 2 Einlagerung 10 des Erntegutes 16 vor.

Im Ergebnis generiert der als Berater 44 fungierende Prozessoptimierungsassistent 32 eine Beratungsdienstleistung 33 welche die Beratungskriterien 35 Ermittlung des Beginns 12 des Futterernteprozesses 1, Ermittlung der die Futterernteprozesskette 1 bildenden Prozessschritte 2 und die Bestimmung der Abfolge der Prozessschritte 2 umfasst. Zudem umfasst die von dem Berater 44 generierte Beratungsdienstleistung 33 optimierte Arbeitsparameter 51 für die in den jeweiligen Prozessschritte 2 des Futterernteprozesses 1 involvierten landwirtschaftlichen Arbeitsmaschinen 31.

Damit der Berater 44 eine Beratungsdienstleistung 33 erbringen kann, die hinreichend externe Bedingungen berücksichtigt umfassen die Eingangsdaten 40 von externen Datenquellen 42 bezogene Wetterdaten und/oder Bodenwertdaten und/oder Geographie- und Topographiedaten. Die Beratungsdienstleistung 33 wird auch dann um so hochwertiger sein je mehr Informationen zum Erntegut 16 und zur Beschaffenheit des Bodens 19 auf welchem das zu Erntegut 16 wächst berücksichtigt werden. In diesem Zusammenhang ist es daher von Vorteil, wenn die Eingangsdaten 40 Aufwuchsmodelldaten, Schätzdaten der zu erwartenden Erträge, Schätzdaten zu den Inhaltsstoffen, Schätzdaten zur voraussichtlichen Trocknungszeit, Schätzdaten zur Befahrbarkeit sowie Daten zu statischen und dynamischen Hindernisse umfassen.

Umfassen die Eingangsdaten 40 Ertragsvorhersagen, ist es von Vorteil, wenn die Ertragsdaten aus einer Kombination von Satellitendaten zur Bestandsvitalität und mittels Photogrammmetrie ermittelten Bestandsvolumen ermittelt werden. Dies hat insbesondere den Vorteil, dass die Beratungsdienstleistung detailliert Bestandseigenschaften berücksichtigen kann.

Zudem kann vorgesehen sein, dass die Eingangsdaten 40 Erfahrungswerte aus Prozessschritten 2 vorhergehender Jahre umfassen.

Weiter kann es vorgesehen sein, dass die Eingangsdaten 40 von Sensorsystemen 59 generierte Daten umfassen, insbesondere Sensorsysteme 59, die eine optimale Anwelkzeit ermitteln, die eine Aufzeichnung der Abarbeitung ermöglichen und Sensorsysteme 59, die eingerichtet sind, Trockenmassegehalte des Erntegutes zu ermittelt.

Zudem kann der Prozessoptimierungsassistent 32 Arbeitsparameter 51 vorschlagen, die in Abhängigkeit von Eigenschaften des Feldbodens 19 generiert werden und vorzugsweise die Anpassung einer Schnitthöhe und die Ablage des Erntegutes 16 in Breitablage 18 umfassen. Auf diese Weise kann in Bereichen mit Maulwurfhügeln die Arbeitsweise der jeweiligen landwirtschaftlichen Arbeitsmaschine 31 so angepasst werden, dass das Erntegut 16 wenig verschmutzt wird.

Zudem kann der Prozessoptimierungsassistent 32 so strukturiert sein, dass er im Zuge der Optimierung der durchzuführenden Prozessschritte 2 das Weglassen oder Wiederholen von Prozessschritten 2 vorschlägt, etwa das Wiederholen oder Weglassen des Prozessschritts 2 Wenden 4 des Erntegutes 16 und/oder das Weglassen des Crackens des Erntegutes 16 im Prozessschritt 2 Mähen 3, wenn zumindest das Qualitätskriterium Feuchte 49h entweder noch nicht oder bereits in einem zulässigen Bereich liegt.

Wie bereits beschrieben wird der Verschmutzungsgrad des Erntegutes 16 insbesondere dadurch niedrig gehalten, wenn die Optimierung der Arbeitsparameter 51 die Optimierung der Rechhöhe in den Prozessschritten 2 Wenden 4 und Schwaden 5 umfasst und die Rechhöhe umso höher vorgeschlagen wird, je schlechter das Qualitätskriterium Verschmutzungsgrad 49g ist.

Wie ebenfalls bereits beschrieben wird der Verschmutzgrad des Erntegutes 16 auch dadurch niedrig gehalten, dass die Optimierung der Arbeitsparameter 51 Schnitthöhe und Schnittzeitpunkt im Prozessschritt 2 Mähen 3 zumindest in Abhängigkeit von einem oder mehreren der Qualitätskriterien 49 Verschmutzungsgrad 49g und Feuchte 49h erfolgt, wobei die Schnitthöhe umso höher und der Schnittzeitpunkt umso später gewählt wird je schlechter die Qualitätskriterien 49 Verschmutzungsgrad 49g und Feuchte 49h sind.

### Bezugszeichenliste:

| | | | |
|---|---|---|---|
| 1 | Futterernteprozess | 34 | Nutzer |
| 2 | Prozessschritt | 35 | Beratungskriterien |
| 3 | Mähen | 36 | Bedieneinrichtung |
| 4 | Wenden/Zetten | 37 | Eingabe- und Anzeigeeinheit |
| 5 | Schwaden | 38 | Speicher- und DV-Einheit |
| 6 | Schwadernte mittels Feldhäcksler | 39 | stationäre Einheit |
| 7 | Schwadernte mittels Ballenpresse | 40 | Eingangsdaten |
| 8 | Aufsammeln und Abtransport der Ballen | 41 | interne Datenquelle |
| 9 | Schwadernte mittels Ladewagen | 42 | externe Datenquelle |
| 10 | Einlagerung Erntegut | 43 | Datencloud |
| 11 | landwirtschaftliche Arbeitsaufgabe | 44 | Berater |
| 12 | Beginn des Futterernteprozesses | 45 | Auftragsbearbeitungsphase |
| 13 | Futterernteprozesskette | 46 | Auftragsgenerierungsphase |
| 14 | Traktor | 47 | Beauftragung |
| 15 | Mähwerk | 48 | Qualitätsparameter |
| 16 | Erntegut | 49 | Qualitätskriterium |
| 17 | Erntegutschwad | 50 | Verwendungszweck |
| 18 | Breitablage | 51 | Arbeitsparameter |
| 19 | Feldboden | 52 | Grenzwert |
| 20 | Heuwerbungsmaschine | 53 | Ergebnisphase |
| 21 | Schwader | 54 | Bearbeitungsschritt |
| 22 | Feldhäcksler | 55 | Ist-Situation |
| 23 | Transportwagen | 56 | Ergebnisdatensatz |
| 24 | Ladewagen | 57 | Arbeitsorgane |
| 25 | Ballenpresse | 58 | Entscheidungskriterien |
| 26 | Erntegutballen | 59 | Sensorsystem |
| 27 | Pritschenwagen | 60 | |
| 28 | Hubstabler | 61 | |
| 29 | Silo | 62 | |
| 30 | Verdichtungsfahrzeug | 63 | |
| 31 | landwirtschaftliche Arbeitsmaschine | 64 | |
| 32 | Prozessoptimierungsassistent | 65 | |
| 33 | Beratungsdienstleistung | | |

## Patentansprüche

1. Prozessoptimierungsassistent (32) zur Optimierung eines Futterernteprozesses (1), wobei der Prozessoptimierungsassistent (32) eingerichtet ist einen Nutzer (34) bei der Optimierung einer den Futterernteprozess (1) beschreibenden landwirtschaftlichen Arbeitsaufgabe (11) zu unterstützen, wobei die Optimierung des Futterernteprozesses (1) zumindest die Planung und/oder Durchführung einer die Umsetzung der landwirtschaftlichen Arbeitsaufgabe (11) bewirkenden Futterernteprozesskette (13) umfasst, wobei die Futterernteprozesskette (13) eine Vielzahl von Prozessschritten (2) und eine Vielzahl landwirtschaftlicher Arbeitsmaschinen (31) umfasst, welche in einer vorgegebenen Reihenfolge die landwirtschaftliche Arbeitsaufgabe (11) abarbeiten,
**dadurch gekennzeichnet,**
**dass** der Prozessoptimierungsassistent (32) eingerichtet ist eine Beratungsdienstleistung (33) zu erbringen, wobei die Beratungsdienstleistung (33) auf die Bearbeitung der landwirtschaftlichen Arbeitsaufgabe (11) gerichtet ist und dass die Beratungsdienstleistung (33) von einem Nutzer (34) beauftragt wird.

2. Prozessoptimierungsassistent (32) zur Optimierung eines Futterernteprozesses (1) nach Anspruch 1,
**dadurch gekennzeichnet,**
**dass** die Beratungsdienstleistung (33) Beratungskriterien (35) umfasst und die Beratungskriterien (35) zumindest
- die Ermittlung eines Startpunktes für den Prozessschritt (2) Beginn (12) des Futterernteprozesses (1)
und/oder
- eine Ermittlung der die Futterernteprozesskette (13) bildenden Prozessschritte (2)
und
- die Bestimmung der Abfolge der Prozessschritte (2) umfassen.

3. Prozessoptimierungsassistent (32) zur Optimierung eines Futterernteprozesses (1) nach Anspruch 2,
**dadurch gekennzeichnet,**
**dass** die den Futterernteprozess (1) beschreibenden ***Prozessschritte*** (2) der Beratungskriterien (35) einen oder mehrere der Prozessschritte (2) Mähen (3) des Erntegutes (16), Wenden (4) des Erntegutes (16), Schwaden (5) des Erntegutes (16), Schwadernte mittels Feldhäcksler (6), Schwadernte mittels Ballenpresse (7), Schwadernte mittels Ladewagen (9), Aufsammeln und Abtransport von Erntegutballen (8) sowie die Einlagerung von Erntegut (10) umfassen.

4. Prozessoptimierungsassistent (32) zur Optimierung eines Futterernteprozesses (1) nach Anspruch 3,
**dadurch gekennzeichnet,**
**dass** die in der Beratungsdienstleistung (33) definierten Prozessschritte (2) die den jeweiligen Prozessschritten (2) zugeordneten erforderlichen landwirtschaftlichen Arbeitsmaschinen (31) umfassen, wobei den landwirtschaftlichen Arbeitsmaschinen (31) Arbeitsorgane (57) zugeordnet sind und die Arbeitsweise der jeweiligen landwirtschaftlichen Arbeitsmaschinen (31) und der ihnen jeweils zugeordneten Arbeitsorgane (57) durch Arbeitsparameter (51) steuerbar sind und die Beratungsdienstleistung (33) weiter die Ermittlung optimierter Arbeitsparameter (51) umfasst.

5. Prozessoptimierungsassistent (32) zur Optimierung eines Futterernteprozesses (1) nach einem der vorhergehenden Ansprüche,
**dadurch gekennzeichnet,**
**dass** der Prozessoptimierungsassistent (32) zumindest eine Bedieneinrichtung (36) umfasst, wobei die Bedieneinrichtung (36) von zumindest einer Eingabe- und Anzeigeeinheit (37) und einer Speicher- und Datenverarbeitungseinheit (38) gebildet wird und die Bedieneinrichtung (36) einer oder mehreren die Prozesskette (2) bildenden landwirtschaftlichen Arbeitsmaschinen (31) und/oder einer stationären Einheit (39) zugeordnet ist und vorzugsweise eine oder mehrere der Bedieneinrichtungen (36) eingerichtet sind untereinander Daten auszutauschen.

6. Prozessoptimierungsassistent (32) zur Optimierung eines Futterernteprozesses (1) nach Anspruch 5,
**dadurch gekennzeichnet,**
**dass** der Prozessoptimierungsassistent (32) weiter eingerichtet ist Eingangsdaten (40) aus internen und/oder externen Datenquellen (41, 42) zu beziehen und das vorzugsweise zumindest die der jeweiligen Bedieneinrichtung (36) zugeordnete Speicher- und Datenverarbeitungseinheit (38) in Teilen oder vollständig einer Datencloud (43) zugeordnet ist.

7. Prozessoptimierungsassistent (32) zur Optimierung eines Futterernteprozesses (1) nach einem der vorhergehenden Ansprüche,
**dadurch gekennzeichnet,**
**dass** die Beratungsdienstleistung (33) des Prozessoptimierungsassistent (32) einen dreiphasigen Beratungsdienstleistungsprozess durchläuft, wobei
die erste Phase die Auftragsgenerierungsphase (46) umfasst und in der Auftragsgenerierungsphase (46) der Nutzer (34) die Beauftragung (47) der Beratungsdienstleistung (33) vornimmt, wobei die Beauftragung (47) zumindest die Definition der durchzuführenden landwirtschaftlichen Arbeitsaufgabe (11) und die Vorgabe von Qualitätsparametern (48) und diesen zugeordnete Qualitätskriterien (49) und/oder die Vorgabe des Verwendungszwecks (50) des Erntegutes (16) umfasst;
die zweite Phase die Auftragsbearbeitungsphase (45) umfasst und in der Auftragsbearbeitungsphase (45) der Prozessoptimierungsassistent (32) auf Eingangsdaten (40) aus internen und/oder externen Datenquellen (41, 42) zugreift und unter Berücksichtigung der eingegebenen oder hinterlegten Qualitätsparameter (48) und/oder den Qualitätsparametern (48) zugeordneten Qualitätskriterien (49) die Beratungsdienstleistung (33) erstellt, wobei der Prozessoptimierungsassistent (32) eingerichtet ist, Grenzwerte (52) für die Qualitätsparameter (48) und/oder die den Qualitätsparametern (48) zugeordneten Qualitätskriterien (49) zu berücksichtigen, wobei die Grenzwerte (52) in dem Prozessoptimierungsassistenten (32) hinterlegt sind oder an diesen übergeben werden und wobei die Auftragsbearbeitungsphase (45) einen Bearbeitungsschritt (54) umfasst, in welchem die Ist-Situation (55) der jeweiligen landwirtschaftlichen Arbeitsaufgabe (11) ermittelt wird
die dritte Phase die Ergebnisphase (53) umfasst, wobei in der Ergebnisphase (53) das Ergebnis der Beratungsdienstleistung (33) an den oder die Nutzer (34) kommuniziert wird, wobei die Beratungsdienstleistung (33) die Beratungskriterien (35), insbesondere die Ermittlung eines Startpunktes für den Prozessschritt (2) Beginn (12) des Futterernteprozesses (1) und/oder eine Ermittlung der die Futterernteprozesskette (13) bildenden Prozessschritte (2) und die Bestimmung der Abfolge der Prozessschritte (2) umfasst, wobei die Beratungsdienstleistung (33) und ihr zugeordneten Beratungskriterien (35) in einem Ergebnisdatensatz (56) zusammengefasst werden, welcher an einen oder mehrere Nutzer (34) übermittelt wird.

8. Prozessoptimierungsassistent (32) zur Optimierung eines Futterernteprozesses (1) nach Anspruch 7,
**dadurch gekennzeichnet,**
**dass** ein Nutzer (34) den die Beratungsdienstleistung (33) repräsentierenden Ergebnisdatensatz (56) zu einem frühen Zeitpunkt in Auftrag geben und abrufen kann.

9. Prozessoptimierungsassistent (32) zur Optimierung eines Futterernteprozesses (1) nach einem der Ansprüche 7 oder 8,
**dadurch gekennzeichnet,**
**dass** der Ergebnisdatensatz (56) während der Abarbeitung der die landwirtschaftlichen Arbeitsaufgabe (11) definierenden Futterernteprozesskette (13) regelmäßig aktualisiert wird.

10. Prozessoptimierungsassistent (32) zur Optimierung eines Futterernteprozesses (1) nach einem der vorhergehenden Ansprüche,
**dadurch gekennzeichnet,**
**dass** der Prozessoptimierungsassistent (32) weiter eingerichtet ist, dass die in der Beratungsdienstleistung (33) die dem jeweiligen Prozessschritt (2) zugeordneten erforderlichen landwirtschaftlichen Arbeitsmaschinen (31) Arbeitsorgane (57) umfassen und die Arbeitsweise der jeweiligen landwirtschaftlichen Arbeitsmaschine (31) und der ihr jeweils zugeordneten Arbeitsorgane (57) durch Arbeitsparameter (51) steuerbar sind und die Beratungsdienstleistung (33) weiter die Ermittlung optimierter Arbeitsparameter (51) umfasst.

11. Prozessoptimierungsassistent (32) zur Optimierung eines Futterernteprozesses (1) nach einem der vorhergehenden Ansprüche,
**dadurch gekennzeichnet,**
**dass** die Eingangsdaten (40) von externen Datenquellen bezogen werden und Wetterdaten und/oder Bodenwertdaten und/oder Geographie- und Topographiedaten umfassen.

12. Prozessoptimierungsassistent (32) zur Optimierung eines Futterernteprozesses (1) nach einem der vorhergehenden Ansprüche,
**dadurch gekennzeichnet,**
**dass** die Eingangsdaten (40) Aufwuchsmodelldaten, Schätzdaten der zu erwartenden Erträge, Schätzdaten zu den Inhaltsstoffen, Schätzdaten zur voraussichtlichen Trocknungszeit, Schätzdaten zur Befahrbarkeit des Feldbodens (19) sowie Daten zu statischen und dynamischen Hindernisse umfassen.

13. Prozessoptimierungsassistent (32) zur Optimierung eines Futterernteprozesses (1) nach einem der vorhergehenden Ansprüche,
**dadurch gekennzeichnet,**
**dass** die Eingangsdaten (40) Ertragsvorhersagen umfassen, wobei die Ertragsvorhersagen eine Kombination aus Satellitendaten zur Bestandsvitalität und mittels Photogrammmetrie ermittelten Bestandsvolumen umfassen können.

14. Prozessoptimierungsassistent (32) zur Optimierung eines Futterernteprozesses (1) nach einem der vorhergehenden Ansprüche,
**dadurch gekennzeichnet,**
**dass** die Eingangsdaten (40) Erfahrungswerte aus Prozessschritten (2) vorhergehender Jahre umfassen.

15. Prozessoptimierungsassistent zur Optimierung eines Futterernteprozesses nach einem der vorhergehenden Ansprüche,
**dadurch gekennzeichnet,.**
**dass** die Eingangsdaten (40) von Sensorsystemen (59) generierte Daten umfassen, insbesondere Sensorsysteme (59), die eine optimale Anwelkzeit ermitteln; die eine Aufzeichnung der Abarbeitung ermöglicht und Sensorsysteme (59), die eingerichtet sind Trockenmassegehalte des Erntegutes (16) zu ermittelt.

16. Prozessoptimierungsassistent (32) zur Optimierung eines Futterernteprozesses (1) nach einem der vorhergehenden Ansprüche,
**dadurch gekennzeichnet,**
**dass** der Prozessoptimierungsassistent (32) Arbeitsparameter (51) vorschlägt, die in Abhängigkeit von Eigenschaften des Feldbodens (19) generiert werden und vorzugsweise die Anpassung einer Schnitthöhe und die Ablage des Erntegutes (16) in Breitablage (18) umfassen.
